# EUROPÄISCHE PATENTANMELDUNG

(11) **EP 2 210 460 A1**
(43) Veröffentlichungstag der Anmeldung: **28.07.2010**
(21) Anmeldenummer: 10000275.7
(22) Anmeldetag: 13.01.2010
(51) Int. Cl.: A01B 61/04, A01C 7/20

(54) **Landmaschine**

(30) Priorität: 23.01.2009 DE 202009000859 U
(71) Anmelder: Alois Pöttinger Maschinenfabrik Ges. m.b.H., 4710 Grieskirchen (AT)
(72) Erfinder: Doppelbauer, Hannes, 4713 Gallspach (AT); Meindlhumer, Wilhelm, 4713 Gallspach (AT); Preimeß, Hans-Jörg, 4710 Grieskirchen (AT)
(74) Vertreter: Thoma, Michael

(57) **Zusammenfassung**

Die vorliegende Erfindung betrifft eine Landmaschine, vorzugsweise Bodenbearbeitungsmaschine und/oder Sämaschine, mit zumindest einer Reihe (5,6), vorzugsweise zumindest zwei Reihen (5,6), von Bodenbearbeitungswerkzeugen (3), die an Schwenkarmen (8) befestigt sind, die schwenkbar an einem gemeinsamen Schwenkarmträger (9) gelagert sind, wobei die Schwenkarme (8) Lagerabschnitte (11) aufweisen, die den genannten Schwenkarmträger (9) umgreifen, wobei zwischen den genannten Lagerabschnitten (11) und den davon umgriffenen Abschnitten des Schwenkarmträgers (9) jeweils elastische Quetschlagerelemente (13) angeordnet sind. Erfindungsgemäß besitzen zumindest jeweils zwei Schwenkarme (8) einen gemeinsamen Lagerabschnitt (11). Neben einer besseren Stabilisierung der Quetschlagerelemente (13) und einer dadurch erreichten Stabilisierung der vorgegebenen, erwünschten Arbeitswinkel des Bodenbearbeitungswerkzeugs (3) ergibt sich sozusagen nebenbei auch der fertigungstechnische Vorteil, dass weniger Teile zu fertigen sind und weniger Montagezeit benötigt wird.

## Beschreibung

Die vorliegende Erfindung betrifft eine Landmaschine, vorzugsweise Bodenbearbeitungsmaschine und/oder Sämaschine, mit zumindest einer Reihe, vorzugsweise zumindest zwei Reihen, von Bodenbearbeitungswerkzeugen, die an Schwenkarmen befestigt sind, die schwenkbar an einem gemeinsamen Schwenkarmträger gelagert sind, wobei die Schwenkarme Lagerabschnitte aufweisen, die den genannten Schwenkarmträger umgreifen, wobei zwischen den genannten Lagerabschnitten und den davon umgriffenen Abschnitten des Schwenkarmträgers jeweils elastische Quetschlagerelemente angeordnet sind.

Eine derartige Landmaschine ist beispielsweise aus der DE 102 04 160 A1 oder der DE 20 2004 007 112 U1 bekannt. Um eine möglichst gute Bodenanpassung zu erreichen, sind die Schwenkarme unabhängig voneinander gegenüber dem Schwenkarmträger schwenkbar und hierzu mit einem muffenförmigen Lagerabschnitt versehen, der unter Verformung der Quetschlagerelemente gegenüber dem Schwenkarmträger verdrehbar ist.

Die Lagerabschnitte der Schwenkarme sowie der darin aufgenommene Schwenkarmträger besitzen jeweils üblicherweise einen vierkantförmigen Querschnitt und sind zueinander in der Ausgangsstellung um π/4 verdreht, so dass vier dreieckförmige Aufnahmekammern für jeweils ein Quetschlagerelement vorgesehen sind.

Ein Problem bei solchen Aufhängungsvorrichtungen besteht in der Stabilisierung und Führung der Gummiquetschelemente zwischen den Lagerabschnitten und dem Schwenkarmträger. Durch die beispielsweise bei Scharscheiben gegebene Schiefstellung der Arbeitsebene gegenüber einer zur Schwenkarmträger-Längsachse senkrecht stehenden Ebene ergeben sich zum Teil nicht unerhebliche Kipp- und Verkantungsmomente, die die Lagerabschnitte der Schwenkarme sozusagen schief verkippen lassen und die üblicherweise aus Gummi bestehenden Quetschlagerelemente ungleichmäßig beanspruchen. In der genannten Schrift DE 20 2004 007 112 sind für die Quetschlagerelemente eigene Lagerkäfige vorgesehen, die deren Position fixieren sollen. Diese Lagerkäfige sind in der genannten Schrift allerdings aus dem Grund vorgesehen, dass die Quetschlagerelemente in mehrere hintereinander angeordnete Abschnitte unterteilt sein sollen. Das Problem des Verschiebens der Lagerelemente aufgrund von schiefen Werkzeugbelastungen und Kippmomenten wird hierdurch jedoch nicht gelöst.

Der vorliegenden Erindung liegt daher die Aufgabe zugrunde, eine verbesserte Landmaschine der genannten Art zu schaffen, die Nachteile des Standes der Technik vermeidet und Letzteren in vorteilhafter Weise weiterbildet. Vorzugsweise soll eine verbesserte Schwenkarmaufhängung erzielt werden, die eine bessere Stabilisierung der Quetschlagerelemente erzielt und deren unbeabsichtigte Verschiebung vermeidet, ohne dies mit einer verschlechterten Bodenanpassung zu erkaufen.

Erfindungsgemäß wird diese Aufgabe durch eine Landmaschine gemäß Anspruch 1 gelöst. Bevorzugte Ausgestaltungen der Erfindung sind Gegenstand der abhängigen Ansprüche.

Es wird also vorgeschlagen, mehrere Schwenkarme an einem gemeinsamen Lagerabschnitt zusammenzufassen. Hierdurch kann einerseits, je nach Anordnung der Bodenbearbeitungswerkzeuge, ein gewisser Ausgleich der Reaktionskräfte in den Lagerabschnitten erzielt werden. Andererseits kann einem einzelnen Lagerabschnitt eine größere Länge gegeben werden, als wie dies möglich wäre, wenn jeder Arm separat einen eigenen Lagerabschnitt besitzt. Erfindungsgemäß besitzen zumindest jeweils zwei Schwenkarme einen gemeinsamen Lagerabschnitt. Neben einer besseren Stabilisierung der Quetschlagerelemente und einer dadurch erreichten Stabilisierung der vorgegebenen, erwünschten Arbeitswinkel des Bodenbearbeitungswerkzeugs ergibt sich sozusagen nebenbei auch der fertigungstechnische Vorteil, dass weniger Teile zu fertigen sind und weniger Montagezeit benötigt wird.

Die Anzahl der an einem gemeinsamen Lagerabschnitt zusammengefassten Schwenkarme kann grundsätzlich je nach Ausbildung der Bodenbearbeitungswerkzeuge und Anordnung derselben variieren. In bevorzugter Weiterbildung der Erfindung sind jedoch nicht mehr als vier Schwenkarme an einem gemeinsamen Lagerabschnitt zusammengefasst, wobei in vorteilhafter Weiterbildung der Erfindung zwei oder drei Schwenkarme einen gemeinsamen Lagerabschnitt besitzen. Hierdurch wird ein guter Kompromiss aus Stabilisierung der Quetschlagerelemente und Aufrechterhaltung der erwünschten Arbeitswinkel einerseits und einer immer noch hervorragenden Bodenanpassung andererseits erzielt. Würden fünf oder noch mehr Schwenkarme an einem gemeinsamen Lagerabschnitt zusammengefasst werden, wäre eine feinfühlige Bodenanpassung beispielsweise bei einem individuellen Auffahren auf einen Stein oder Längsriefen im Boden erschwert.

Vorteilhafterweise sind an einem gemeinsamen Lagerabschnitt unmittelbar benachbarte Schwenkarme zusammengefasst.

Die an einem gemeinsamen Lagerabschnitt zusammengefassten Schwenkarme können dabei jeweils unterschiedliche Werkzeuge in unterschiedlicher Anordnung tragen. In Weiterbildung der Erfindung kann jeder Schwenkarm eine Scharscheibe tragen, die drehbar an dem Schwenkarm gelagert ist. Grundsätzlich könnten die Schwenkarme, die an einem gemeinsamen Lagerabschnitt zusammengefasst sind, unterschiedlich lang ausgebildet sein. Vorteilhafterweise sind jedoch etwa gleich lang ausgebildete Schwenkarme an einem Lagerabschnitt zusammengefasst, so dass die Bearbeitungswerkzeuge, die über einen gemeinsamen Lagerabschnitt aufgehängt sind, in Längsrichtung des Schwenkarmträgers unmittelbar hintereinander positioniert sind.

Die an einem gemeinsamen Lagerabschnitt zusammengefassten Schwenkarme sind dabei vorteilhafterweise auch parallel zueinander ausgerichtet. Insbesondere können hierbei die über einen gemeinsamen Lagerabschnitt abgestützten Bodenbearbeitungswerkzeuge mit ihren Hauptachsen gleichsinnig geneigt angeordnet sein. Besonders vorteilhaft ist die Abstützung mehrerer Schwenkarme über einen gemeinsamen Lagerabschnitt dann, wenn spitzwinklig zur Fahrtrichtung geneigte Bodenbearbeitungswerkzeuge vorgesehen sind, wie dies beispielsweise bei Scharscheiben der Fall sein kann, die mit der zur Rotationsachse der Scharscheiben senkrecht stehenden Arbeitsebene zur Fahrtrichtung spitzwinklig und/oder zur Vertikalen spitzwinklig geneigt sein können. Bei derartigen geneigten Werkzeuganordnungen ist die durch die Zusammenfassung mehrerer Schwenkarme an einem gemeinsamen Lagerabschnitt erreichte Stabilisierung der Quetschlagerelemente von besonderem Vorteil, da hierbei entstehende Kippmomente besser abgetragen werden können.

Je nach Abstand bzw. Teilung der Bodenbearbeitungswerkzeuge und Ausbildung dieser Bodenbearbeitungswerkzeuge können die gemeinsamen Lagerabschnitte unterschiedlich dimensioniert sein. Nach einer vorteilhaften Ausführung der Erfindung ist ein gemeinsamer Lagerabschnitt, der zwei oder mehr Schwenkarme trägt, in Längsrichtung des Schwenkarmträgers länger als der Abstand zweier benachbarter Bodenbearbeitungswerkzeuge ausgebildet. Hierdurch kann eine erhöhte Stabilisierung gegen Verkippen erzielt werden. Andererseits ist der gemeinsame Lagerabschnitt dann, wenn an diesem zwei Schwenkarme zusammengefasst sind, kürzer als die Summe der Abstände von drei Bodenbearbeitungswerkzeugen bzw. dann, wenn drei Schwenkarme an dem Lagerabschnitt zusammengefasst sind, kürzer als die Summe der Abstände von vier Bodenbearbeitungswerkzeugen bzw. dann, wenn vier Schwenkarme an dem gemeinsamen Lagerabschnitt zusammengefasst sind, kürzer als die Summe der Abstände von fünf Bodenbearbeitungswerkzeugen.

Der Lagerabschnitt, der zwei oder mehr Schwenkarme trägt, kann grundsätzlich verschieden ausgebildet sein. In bevorzugter Weiterbildung der Erfindung bildet der Lagerabschnitt eine ringförmig geschlossene Hülse oder Muffe, durch die hindurch sich der Schwenkarmträger erstreckt, wobei die Hülse und der Schwenkarmträger jeweils einen von der Kreisform abweichenden Querschnitt besitzen. Insbesondere können der Lagerabschnitt und der Schwenkarmträger jeweils einen Querschnitt eines Mehrkantprofils, insbesondere Vierkantprofils besitzen, wobei die Profile des Lagerabschnitts und des Schwenkarmträgers in der Neutralstellung gegenüber verdreht sind, so dass sich taschenförmige Zwischenräume zwischen dem Lagerabschnitt und dem Schwenkarmträger ergeben, in die die Quetschlagerelemente eingesetzt sein können.

Der Lagerabschnitt kann hierbei ggf. mehrteilig ausgebildet sein, vorzugsweise in Form zweier Halbschalen ausgebildet sein, so dass jeder Lagerabschnitt separat demontiert werden kann, ohne alle davor oder dahinter auf dem Schwenkarmträger positionierten Lagerabschnitt zuvor abbauen zu müssen.

Die Anordnung der an einem gemeinsamen Lagerabschnitt zusammengefassten Schwenkarme kann hierbei grundsätzlich variieren. Um eine möglichst symmetrische Krafteinleitung und möglichst geringe Kippmomente zu erreichen, ist in Weiterbildung der Erfindung vorgesehen, dass die Schwenkarme an derselben Seite des Lagerabschnitts befestigt sind, insbesondere etwa an einem gemeinsamen Winkelsektor von dem Lagerabschnitt aus auskragen.

Die Quetschlagerelemente können ebenfalls grundsätzlich verschieden ausgebildet sein, beispielsweise im Sinne der Schrift DE 20 2004 007 112 U1 in mehrere Lagerelementeabschnitte unterteilt sein, die sich hintereinander erstrecken. Insoweit wird auf die genannte Schrift verwiesen. Alternativ kann in Weiterbildung der Erfindung jedoch vorgesehen sein, dass die Quetschlagerelemente sich in Längsrichtung des Schwenkarmträgers im Wesentlichen über die gesamte Länge der jeweiligen Lagerabschnitte erstrecken. Hierdurch kann eine hervorragende Stabilisierung der Quetschlagerelemente erzielt werden.

Die vorliegende Erfindung wird nachfolgend anhand eines bevorzugten Ausführungsbeispiels und zugehöriger Zeichnungen näher erläutert. In den Zeichnungen zeigen:
- Fig. 1:: eine perspektivische, schematische Ansicht einer Scheibenegge, die eine Reihe von nebeneinander, quer zur Fahrtrichtung vorgesehener Scharscheiben umfasst, die an jeweils einem Schwenkarm gelagert sind, und
- Fig. 2:: eine ausschnittsweise, schematische und perspektivische Ansicht der Aufhängung zweier Scharscheiben, deren Schwenkarme einen gemeinsamen Lagerabschnitt besitzen, der den Schwenkarmträger der Aufhängung umgreift.

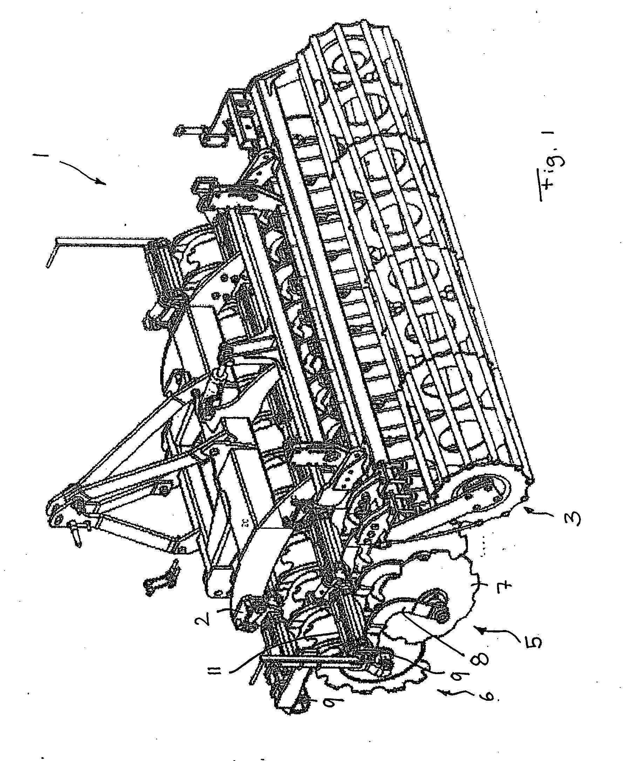

Die in Fig. 1 gezeigte Bodenbearbeitungsmaschine 1 kann Teil einer Sämaschinenkombination sein oder auch separat an einen Schlepper angebaut werden. Die Maschine 1 umfasst zwei hintereinander angeordnete Scharreihen 5 und 6, die an einem gemeinsamen Maschinenrahmen 2 aufgehängt sind, der des Weiteren einen nachgeschalteten, walzenähnlichen Bodenkonditionierer 3 trägt.

Jede der Scharreihen 5 bzw. 6 umfasst eine Vielzahl von in Reihe nebeneinander angeordneten Scharscheiben 7, die aufrecht, zur Fahrtrichtung jedoch schräg angestellt drehbar an jeweils einem Schwenkarm 8 gelagert sind. Alle Schwenkarme 8 einer Scharreihe 5 bzw. 6 sind an einem einen Schwenkarmträger 9 bildenden Querträger aufgehängt. Die Aufhängung 10 der Schwenkarme 8 ist dabei derart ausgebildet, dass die Scharscheiben 7 in den Boden gedrückt werden, jedoch bei Auffahren auf Hindernisse, wie z. B. Steine, nach oben ausweichen können.

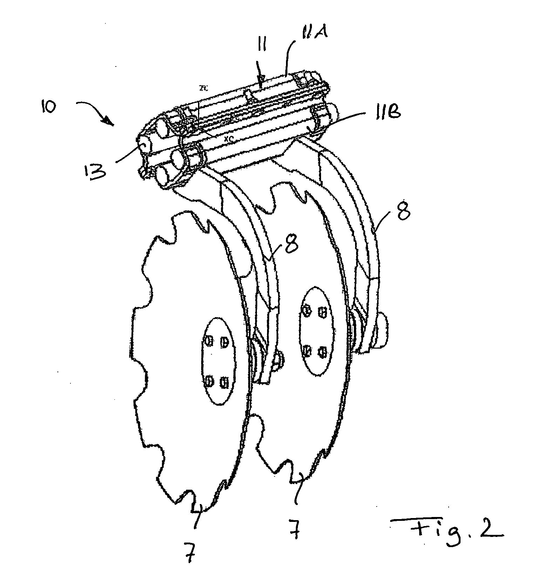

Die Schwenkarme 8 erstrecken sich von den Scharscheiben 7 jeweils schräg nach oben zu dem quer verlaufenden Schwenkarmträger 9. An ihrem schwenkarmträgerseitigen Ende umfasst jeder der Schwenkarme 8 einen rohrförmigen Lagerabschnitt 11, der den entsprechenden Abschnitt des Schwenkarmträgers 9 umgreift. Wie die Figuren 1 und 2 zeigen, besitzt der Schwenkarmträger 9 in der gezeichneten Ausführungsform einen vierkantförmigen Querschnitt. Ebenso besitzt in der gezeichneten Ausführungsform der den Schwenkarmträger 9 umgreifende Lagerabschnitt 11 einen vierkantförmigen Querschnitt, wobei der Lagerabschnitt 11 gegenüber dem Profil des Schwenkarmträgers 9 in der Ausgangsstellung um ca. ^{π}/₄ verdreht ist, so dass sich der Zwischenraum zwischen dem Lagerabschnitt 11 und dem davon umgriffenen Schwenkarmträger 9 in vier Lagerelementekammern untergliedert.

In jeder der Lagerelementekammern steckt jeweils ein gummielastisches Lagerelement 13. Jedes der Lagerelemente 13 steckt passgenau und formschlüssig zwischen dem eine Lagerschale bildenden Lagerabschnitt 11 und dem Schwenkarmträger 9, so dass der Lagerabschnitt 11 und die daran befestigten Schwenkarme 8 stabil und fest gehalten sind. Wird der jeweilige Schwenkarm 8 jedoch beispielsweise beim Auffahren der entsprechenden Scharscheibe 7 auf einen Stein um den Schwenkarmträger 9, der insofern die Schwenkachse für den Schwenkarm 8 definiert, gedreht bzw. geschwenkt, kommt es zu einer Verformung der Lagerelemente 13. Diese definieren durch ihre Härte und Verformbarkeit die Federkennlinie der Schwenkarmlagerung.

Die in Figur 2 gezeigten Lagerelemente 13 sind im wesentlichen zylindrisch, wobei sich die Zylinderachse parallel zur Schwenkachse des jeweiligen Schwenkarms 8 erstreckt. Sie können kreiszylindrisch ausgebildet sein. Sie können auch auf einer Seite eine Abflachung besitzen, mit der sie beispielsweise auf der flachen Außenkontur des Schwenkarmträgers 9 aufliegen. Durch die zylindrische Form der Lagerelemente liegen sowohl der Lagerabschnitt des Schwenkarms 8 als auch der Schwenkarmträger 9 quer zur Längsrichtung des Schwenkarms 8 in voller Länge des Lagerelements 13 auf diesem auf, wodurch eine günstige Druckverteilung erreicht wird.

Die Lagerelemente 13 sind vorteilhafterweise aus Gummi gefertigt, insbesondere können sie von einem Gummistrang heruntergeschnittene Gummistrangstücke sein. Alternativ können die Lagerelemente auch aus einem geeigneten Kunststoff gefertigt sein, der die gewünschte Elastizität und die gewünschte Härte aufweist.

Wie Fig. 2 zeigt, sind dabei jeweils zwei Schwenkarme 8 an einem gemeinsamen Lagerabschnitt 11 zusammengefasst. Die beiden in Fig. 2 gezeigten Schwenkarme 8 sind hierbei starr an dem hülsenförmigen Lagerabschnitt 11 befestigt. Der genannte Lagerabschnitt ist hierbei aus zwei Halbschalen 11A und 11B zusammengesetzt, im zusammengesetzten Zustand jedoch einstückig und ringförmig geschlossen.

## Patentansprüche

1. Landmaschine, vorzugsweise Sämaschine und/oder Bodenbearbeitungsmaschine, mit zumindest einer Reihe (5, 6) von Bodenbearbeitungswerkzeugen (3), die an Schwenkarmen (8) befestigt sind, die schwenkbar an einem gemeinsamen Schwenkarmträger (9) gelagert sind, wobei die Schwenkarme (8) Lagerabschnitte (11) aufweisen, die den Schwenkarmträger (9) umgreifen, wobei zwischen den Lagerabschnitten (11) und den davon umgriffenen Abschnitten des Schwenkarmträgers (9) jeweils elastische Quetschlagerelemente (13) angeordnet sind, **dadurch gekennzeichnet, dass** zumindest jeweils zwei Schwenkarme (8) einen gemeinsamen Lagerabschnitt (11) aufweisen.

2. Landmaschine nach dem vorhergehenden Anspruch, wobei mindestens zwei Reihen (5, 6) von Bodenbearbeitungswerkzeugen vorgesehen sind, die jeweils an Schwenkarmen befestigt sind, wobei vorzugsweise in jeder Reihe von Bodenbearbeitungswerkzeugen (3) zumindest zwei Schwenkarme (8) einen gemeinsamen Lagerabschnitt (11) aufweisen.

3. Landmaschine nach einem der vorhergehenden Ansprüche, wobei jeweils zwei bis vier, vorzugsweise zwei oder drei Schwenkarme (8) einen gemeinsamen Lagerabschnitt (11) besitzen.

4. Landmaschine nach einem der vorhergehenden Ansprüche, wobei die Schwenkarme (8) eines gemeinsamen Lagerabschnitts (11) jeweils ein Bodenbearbeitungswerkzeug (3), vorzugsweise eine drehbar gelagerte Scharscheibe, tragen.

5. Landmaschine nach einem der vorhergehenden Ansprüche, wobei die über einen gemeinsamen Lagerabschnitt (11) abgestützten Bodenbearbeitungswerkzeuge (3) mit ihren Hauptachsen gleichsinnig geneigt angeordnet sind, insbesondere derart, dass eine zur genannten Hauptachse senkrecht stehende Arbeitsebene spitzwinklig geneigt zur Fahrtrichtung und/oder spitzwinklig geneigt zu einer Vertikalen angeordnet ist.

6. Landmaschine nach einem der vorhergehenden Ansprüche, wobei der gemeinsame Lagerabschnitt (11) in Längsrichtung des Schwenkarmträgers (9) länger als der Abstand zweier benachbarter Bodenbearbeitungswerkzeuge (3) ausgebildet ist.

7. Landmaschine nach einem der vorhergehenden Ansprüche, wobei der gemeinsame Lagerabschnitt (11) eine ringförmig geschlossene, vorzugsweise mehrteilige, insbesondere aus zwei Halbschalen bestehende, Hülse bildet, durch die hindurch sich der Schwenkarmträger (9) erstreckt, wobei die Hülse und der Schwenkarmträger (9) jeweils einen von der Kreisform abweichenden, vorzugsweise als Mehrkantprofil ausgebildeten, Querschnitt besitzen.

8. Landmaschine nach einem der vorhergehenden Ansprüche, wobei die Schwenkarme (8) an derselben Seite des Lagerabschnitts (11) befestigt sind und/oder in einem gemeinsamen Winkelsektor von dem gemeinsamen Lagerabschnitt (11) auskragen.

9. Landmaschine nach einem der vorhergehenden Ansprüche, wobei die Schwenkarme (8) eines gemeinsamen Lagerabschnitts (11) an dem genannten Lagerabschnitt (11) starr befestigt sind.

10. Landmaschine nach einem der vorhergehenden Ansprüche, wobei die Quetschlagerelemente (13) sich in Längsrichtung des Schwenkarmträgers (9) im Wesentlichen über die gesamte Länge der Lagerabschnitte (11) erstrecken.
